# EUROPÄISCHE PATENTSCHRIFT

(11) **EP 1 345 980 B1**
(45) Veröffentlichungstag und Bekanntmachung des Hinweises auf die Patenterteilung: **25.05.2005**
(21) Anmeldenummer: 01271410.1
(22) Anmeldetag: 27.11.2001
(51) Int. Cl.: C08G 63/78, C07C 67/02, C07C 67/03, B01D 3/00

(54) **VERFAHREN ZUR KONTINUIERLICHEN HERSTELLUNG VON POLYESTERN ODER COPOLYESTERN**
METHOD FOR CONTINUOS PRODUCTION OF POLYESTERS OR COPOLYESTERS
PROCEDE DE FABRICATION EN CONTINU DE POLYESTERS OU DE COPOLYESTERS

(30) Priorität: 21.12.2000 DE 10064361; 02.06.2001 DE 10127147
(43) Veröffentlichungstag der Anmeldung: 24.09.2003
(73) Patentinhaber: Zimmer AG, 60388 Frankfurt (DE)
(72) Erfinder: REISEN, Michael, 60316 Frankfurt am Main (DE); WILHELM, Fritz, 61184 Karben (DE)
(74) Vertreter: Meyer-Dulheuer, Karl-Hermann, Dr.
(86) Internationale Anmeldenummer: PCT/EP2001/013776
(87) Internationale Veröffentlichungsnummer: WO 2002/050159

(56) Entgegenhaltungen:
- EP-A- 1 046 662
- US-A- 4 670 580
- US-A- 5 466 776
- DATABASE WPI Week 199729 Derwent Publications Ltd., London, GB; AN 1997-316631 XP002195467 & JP 09 124783 A (TORAY IND INC), 13. Mai 1997 (1997-05-13)

## Beschreibung

Die Erfindung betrifft ein Verfahren zur Herstellung von Polyestern oder Copolyestern durch kontinuierliche Veresterung von Dicarbonsäureestern und Diolen oder durch kontinuierliche Umesterung von Dicarbonsäureestern mit Diolen in n hintereinander geschalteten Reaktionsdruckstufen, wobei der in der ersten Reaktionsdruckstufe herrschende gegenüber den anderen Reaktionsdruckstufen höhere Druck sukzessive von Reaktionsdruckstufe zu Reaktionsdruckstufe abfällt, die Brüdenströme der einzelnen Reaktionsdruckstufen vereinigt in eine Trennkolonne eingespeist und rektifiziert werden, und die im Sumpf der Trennkolonne anfallende Diolkomponente mindestens in die erste Reaktionsdruckstufe rückgeführt wird.

Die kontinuierliche Herstellung von Polyethylenterephthalat (PET) aus der Terephthalsäure (TPA) und Ethandiol (EG) erfolgt bekanntermaßen durch Veresterung in einer ersten Reaktionsstufe unter erhöhtem Druck und in einer weiteren Reaktionsstufe unter Normaldruck. Zur weiteren Oligomerisierung der Veresterungsprodukte sind zwei unter Vakuum arbeitende Vorpolykondensationsstufen und ein Endreaktor für die Erzeugung der fertigen Polyesterschmelze im Feinvakuum nachgeschaltet.

Für die Durchführung eines solchen 5-stufigen Verfahrens sind in der EP-B-0244 546 Apparate zur Brüdenkondensation und Vakuumerzeugung mittels mehrstufiger Wasserdampfstrahlpumpen mit jeweils vorgeschaltetem Sprühkondensator und nachgeschalteten Mischkondensatoren beschrieben. Die Wasserdampfstrahlpumpen werden mit geläutertem, einen Überdruck von 2 bis 3 bar aufweisenden Prozesswasserdampf aus der Trennkolonne über der ersten Reaktionsdruckstufe betrieben, wobei von den Mischkondensatoren eine Kühlwasserrezirkulation zu der Trennkolonne hin erfolgt. Die Nachteile dieses Verfahrens bestehen im wesentlichen in einer hohen organischen Kontamination des Abwassers bei offenen Prozesskreisläufen und in einem insgesamt großen und kostenintensiven Apparateaufwand, da jede Reaktionsstufe, auch die zweite Reaktionsstufe der Veresterung ein separates Kondensationssystem aufweist. Darüber hinaus nimmt die Bildung von Diethylenglycol (DEG) als Folge des erhöhten Drucks in der ersten Reaktionsdruckstufe und im Sumpf der Trennkolonne zu.

Im allgemeinen ist anzumerken, dass bei der Rektifikation des originären überhitzten Brüdenstroms mit einem Gewichtsanteil von ca. 50 % EG in der Trennkolonne ein beachtlicher Teil des Dampfs als Treibdampf für den Betrieb von Dampfstrahlpumpen materiell und energetisch verloren geht.

Eine Verbesserung des vorstehend beschriebenen Verfahrens wird dadurch erreicht, dass die Brüden der ersten und zweiten Reaktionsdruckstufe der Veresterung zusammen einer Trennkolonne zugeführt und zwei Vakuumstufen in einer einzigen Vorpolykondensationsstufe zusammengefasst sind.

Nachteil einer einzigen Vorpolykondensationsstufe ist jedoch eine baugrößenbedingte Kapazitätsbegrenzung in Folge einer gesteigerten Gasentwicklung und der steigenden Gefahr eines Tröpfchenmitrisses (Entrainment) sowie ein in der Regel unerwünschter Anstieg des Gehalts an Carboxylgruppen im Polyester bzw. Copolyester als Folge einer schnelleren Verdampfung von EG während der Vorpolykondensation ohne Druckdifferenzierung.

Gegenstand der US-A-4 670 580 ist ein 4-stufiges Gesamtverfahren zur Herstellung von PET, bei dem in der zweiten Reaktionsstufe eine Veresterung unter Vakuum vorgesehen ist und bei dem ein typischer Säureumsatz von 97 % erfolgt. Dieser Umsatz erscheint für eine nachhaltige Gasentlastung in der Vorpolykondensationsstufe als zu gering, d.h. für einen gesteigerten Umsatz werden längere Verweilzeiten, also größere und kostspieligere Reaktionsapparate erforderlich. In jedem Fall ist eine zusätzliche Trennkolonne mit Rückführung von EG oder ein anderes, separates Kondensationssystem mit nachgeschalteter Rückgewinnung von EG nötig.

Darüber hinaus bestehen bei der Veresterung unter Vakuum in der zweiten Reaktionsstufe im Hinblick auf Qualität und Flexibilität der Anlage bezüglich der Zugabe von Additiven beachtliche Vorbehalte; denn ohne Normaldruck und ohne Rühren der Schmelze ist insbesondere bei der textilen PET-Herstellung eine agglomerat- und verdampfungsverlustfreie Einmischung von Additiven erschwert.

Es ist die Aufgabe der vorliegenden Erfindung das eingangs beschriebene Verfahren in der Weise zu verbessern, dass der apparative Aufwand und die Betriebskosten für Kühlwasser und für Energie, ohne Beeinträchtigung der Qualität der erzeugten Polyester bzw. Copolyester und der Flexibilität des Verfahrens gesenkt werden.

Gelöst ist diese Aufgabe dadurch, dass ausgehend von dem eingangs beschriebenen Verfahren wenigstens die letzte Reaktionsdruckstufe bei unteratmosphärischem Druck von 100 bis 900 mbar (absolut) betrieben wird, der Druck in der Trennkolonne größer als in der letzten Reaktionsdruckstufe ist und die aus der letzten Reaktionsdruckstufe austretenden Brüden auf den in der Trennkolonne herrschenden Druck verdichtet werden.

Die verschiedenen Prozesse zur Veresterung oder Umesterung werden in n hintereinander geschalteten Reaktionsdruckstufen durchgeführt, wobei mit wachsenden Monomerumsätzen bzw. fortschreitender Reaktionsdruckstufenfolge der Druck sukzessive abnimmt.

Beim Veresterungsverfahren zur Herstellung von Polybutylenterephthalat (PBT) werden die Reaktionsdruckstufen ausschließlich bei Unterdruck betrieben, während beim Veresterungsverfahren zur Herstellung von PET und Polytrimethylterephthalat (PTT) die erste Reaktionsdruckstufe mit Überdruck und die letzte Reaktionsdruckstufe mit Unterdruck gefahren werden. Beim Umesterungsverfahren, ausgehend von Dimethylterephthalat (DMT) und 1,4-Butandiol (BDO), wird die erste Reaktionsdruckstufe im wesentlichen unter Normaldruck betrieben.

Für die technische Wirkung des erfindungsgemäßen Verfahrens ist unerheblich, ob die einzelnen Reaktionsdruckstufen in einer einzigen Apparatur angeordnet oder als getrennte Reaktoren ausgeführt sind.

Für die Durchführung des erfindungsgemäßen Verfahrens werden wenigstens zwei Reaktionsdruckstufen benötigt. Für eine ausgesprochen vorteilhafte Verfahrensführung ist es zweckmäßig drei Reaktionsdruckstufen zu benutzen. Die Anwendung eines Verfahrens mit vier Reaktionsdruckstufen ist ebenfalls möglich, bei dem die Brüden der letzten Reaktionsdruckstufe auf den Druck der vorletzten Reaktionsdruckstufe bzw. den Druck der Trennkolonne verdichtet werden.

Eine Kondensation der Brüden der letzten Reaktionsdruckstufe und eine dementsprechende größere Trennkolonne werden durch eine Verdichtung der Brüden auf einen vergleichsweise höheren Druck vermieden. Für den Fall, dass das Verfahren unter Einsatz von zwei Reaktionsdruckstufen durchgeführt wird, liegt die Höhe des Drucks in der Trennkolonne zwischen dem Druck in der ersten Reaktionsdruckstufe und demjenigen der zweiten Reaktionsdruckstufe. Bei der Verwendung von mehr als zwei Reaktionsdruckstufen entspricht der Druck in der Trennkolonne höchstens dem in der vorletzten Reaktionsdruckstufe herrschenden Druck.

Die Verdichtung der Brüden erfolgt mittels Kompressor, Gebläse oder Ventilator. Besonders vorteilhaft ist jedoch, die Verdichtung der Brüden mittels einer Gasstrahlpumpe unter Verwendung überhitzter Brüden aus der ersten Reaktionsdruckstufe als Treibdampf vorzunehmen, da Brüden der ersten Reaktionsdruckstufe in ausreichender Menge kostenfrei zur Verfügung stehen und somit die Verdichtung der Brüden mittels Einsatz von Kompressoren, Gebläsen oder Ventilatoren erst in zweiter Linie in Betracht kommt.

Eine besondere Ausgestaltung des erfindungsgemäßen Verfahrens ist darin zu sehen, dass der in der Trennkolonne herrschende Druck durch eine nach dem am Kopf der Trennkolonne angebrachten Kondensator erfolgende Restgasabsaugung, beispielsweise über eine Flüssigkeitsstrahlpumpe, eine Flüssigkeitsringpumpe oder auch über ein Gebläse, regelbar ist.

Ein weiterer Aspekt des erfindungsgemäßen Verfahrens ist speziell bei der PET-Veresterung die Druckregelung in der Vakuumveresterungsstufe bei Teillast unter Berücksichtigung eines bei konstantem Füllniveau in der ersten Reaktionsdruckstufe und einer unverändert geringen DEG-Bildung sich mit kleinerem Durchsatz reduzierenden Druckes, beispielsweise von ca. 1750 mbar bei 100% auf ca. 1250 mbar bei 50 % Durchsatz. Infolge des reduzierten Treibdampfdrucks an der Gasstrahlpumpe bei Teillast erhöht sich der Druck der Vakuumstufe von etwa 500 mbar bei Volllast auf etwa 800 mbar bei 50 % Durchsatz mit jeweils konstantem Gegendruck von etwa 1000 mbar an der Trennkolonne.

Aus Qualitätsgründen ist aber ein konstantes Vakuum in der Vakuumveresterungstufe, unabhängig vom Durchsatz, gefordert.

Erfindungsgemäß wird diese Druckkonstanz ohne größere Abmessungen der Trennkolonne mit einer kontrollierten Absenkung des Drucks in der Trennkolonne bei einem Durchsatz von 50 % auf 640 bis 700 mbar erreicht.

Das entsprechende Vorvakuum der Trennkolonne wird über ein, nach dem Kolonnenkopfkondensator angeordnetes Entlüftungsgebläse, alternativ über eine Flüssigkeitsstrahlpumpe oder eine Flüssigkeitsringpumpe, erzeugt und geregelt.

Zur kontinuierlichen Herstellung von PET-Veresterungsprodukt eignet sich bevorzugt ein dreistufiges Verfahren mit den in Tabelle 1 beispielhaft angegebenen Parametern.

**Tabelle 1**

| Stufen | lfd. Nr. | I | II | III |
|---|---|---|---|---|
| Temperatur | (°C) | 243 - 269° | 255-270° | 262 - 272° |
| Druck | (bar) | 1,2-2,5 | 1,0-1,1 | 0,3 - 0,6 |
| Verweilzeit | (min) | 120'-450' | 35'-110' | 45' - 130' |

Der ersten unter Überdruck betriebenen Reaktionsdruckstufe (I) werden gleichzeitig EG und TPA als Paste im Mol-Verhältnis < 2 bevorzugt ≤ 1,2 eingespeist, wobei TPA-Umsätze von 88 bis 93 % erzielt werden. Die zweite Reaktionsdruckstufe (II) wird unter Normaldruck betrieben und ein Umsatz von 94 bis 97,4 %, vorzugsweise 95,5 bis 96,7 % erzielt. Die Reaktionsdruckstufe (II) dient der Einmischung von Additiven und der Feinjustierung des molaren EG-Gehalts im Endprodukt. In der unter Vakuum betriebenen dritten Reaktionsstufe (III) wird der Umsatz auf> 97 bis 99 %, bevorzugt auf 97,9 bis 98,5 % gesteigert.

Mittels einer Gasstrahlpumpe werden die Brüden aus der dritten Reaktionsdruckstufe (III) auf den Druck der Trennkolonne verdichtet. Der Treibdampf wird aus den Brüden der ersten Reaktionsdruckstufe (I) entnommen. Bei Nennlast erfolgt eine 1,6 bis 2,6 - fache Drucksteigerung der Brüden während der Verdichtung der Brüden aus der letzten Stufe.

Die kontinuierliche Herstellung von PTT-Veresterungsprodukt erfolgt zweckmäßigerweise mittels eines zweistufigen Verfahrens mit den in Tabelle 2 beispielhaft angegebenen Parametern, wobei eine aus 1,3-Propandiol (PDO) und TPA erzeugte Paste im Mol-Verhältnis von 1,15 bis 2,20, vorzugsweise von ≤ 1,40 eingesetzt wird.

**Tabelle 2**

| Stufe | | I | II |
|---|---|---|---|
| PDO/TPA Einspeise Mol-Verhältnis | | 1,15-2,20 | - |
| Temperatur | (°C) | 243-263 | 242-262 |
| Druck | (bar) | 1,0-3,5 | 0,7 - 1,1 |
| Verweilzeit | (min) | 140-360 | 30-80 |

Bei der Herstellung von PBT-Umesterungsprodukt mittels eines zweistufigen Verfahrens werden Butandiol (BDO) und flüssiges DMT getrennt mit einem Mol-Verhältnis von 1,2 bis 1,4 in die erste Reaktionsdruckstufe eingespeist. Die Verfahrensparameter sind in Tabelle 3 beispielhaft wiedergegeben.

**Tabelle 3**

| Stufe | | I | II |
|---|---|---|---|
| BDO/DMT Einspeise Mol-Verhältnis | | 1,15-1,50 | - |
| Temperatur | (°C) | 165-185 | 195-210 |
| Druck | (bar) | 0,90-1,20 | 0,4-0,7 |
| Verweilzeit | (min) | 70-180 | 40-90 |

Das erfindungsgemäße Verfahren ist in der Zeichnung schematisch dargestellt und wird nachstehend beispielhaft näher erläutert. Es zeigen
- Fig. 1: ein Verfahrensschema zur Herstellung von Veresterungs-/Umesterungsprodukten mittels zwei Reaktionsdruckstufen für PPT und PBT
- Fig. 2: eine Ausgestaltung des Verfahrensschemas gemäß Fig. 1
- Fig. 3: ein Verfahrensschema zur Herstellung von PET-Veresterungsprodukt mittels drei Reaktionsstufen.

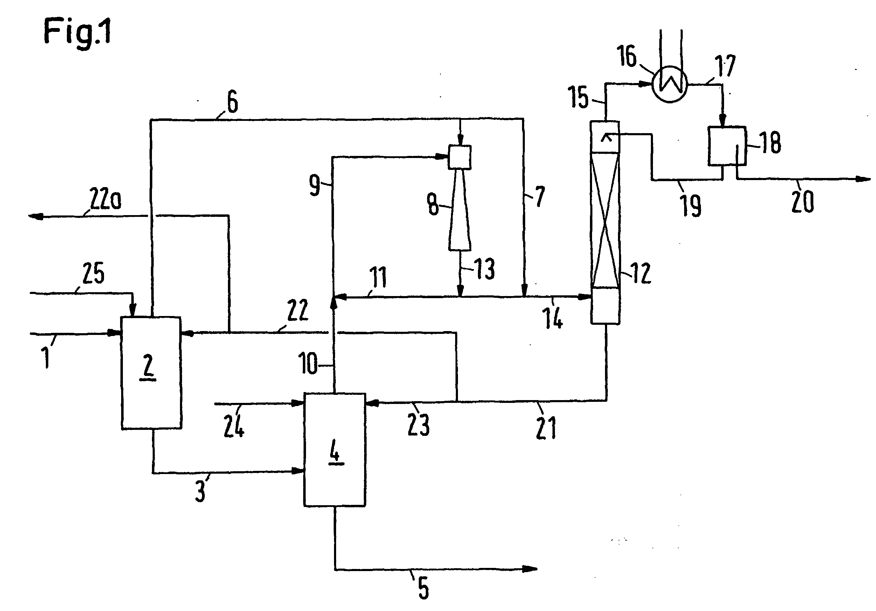

Gemäß Fig. 1 wird über Leitung (1) eine vorgefertigte Diol/Dicarbonsäure-Paste in den ersten Reaktor (2) eingespeist. Der über Leitung (3) aus dem ersten Reaktor (2) austretende Produktstrom wird dem zweiten Reaktor (4) zugeführt. Über Leitung (5) tritt das fertige Veresterungsprodukt aus dem zweiten Reaktor (4) aus. Die aus dem ersten Reaktor (2) austretenden Brüden werden über Leitung (6) abzüglich eines kleinen über Leitung (7) geführten, zur Druckregulierung in der ersten Reaktionsstufe vorgesehenen Bypassstroms, einer beheizten Gasstrahlpumpe (8) zugeführt mittels der der über Leitung (9) eingespeiste Gasstrom, der aus den über Leitung (10) austretende Brüden des zweiten Reaktors (4) und eines zur Regelung des Drucks im zweiten Reaktor (4) zu verwendenden, über Leitung (11) fließenden Ballaststrom zusammengesetzt ist, auf den Druck der Trennkolonne (12) verdichtet wird. Die aus dem ersten Reaktor über Leitung (6) und die aus dem zweiten Reaktor über Leitungen (10, 9) abgeführten Brüden werden der Gasstrahlpumpe (8) aufgegeben. Der aus der Gasstrahlpumpe (8) über Leitung (13) austretende Brüdenstrom wird in Leitung (14) mit dem über Leitung (7) zugeführten Brüden-Bypassstrom vereinigt und dem Zulauf der Trennkolonne (12) aufgegeben, in der die leicht siedenden Komponenten von der schwer siedenden Diolkomponente getrennt werden. Die am Kopf der Trennkolonne (12) über Leitung (15) austretenden leicht siedenden Komponenten werden in dem Kondensator (16) kondensiert. Das über Leitung (17) abströmende Kondensat wird über den Rücklaufbehälter (18) in einen Rücklaufstrom und einen Erzeugnisstrom geteilt. Der Rücklaufstrom wird über Leitung (19) dem Kopf der Trennkolonne (12) zugeleitet und der Erzeugnisstrom über Leitung (20) abgezogen. Das im Sumpf der Trennkolonne (12) angereicherte Diol wird zum überwiegenden Teil über Leitungen (21, 22) dem ersten Reaktor (2) zugeführt und nur ein kleiner über Leitung (23) abgezweigter Teil dem zweiten Reaktor (4) zugeleitet Es besteht die Möglichkeit, über Leitung (24) Additive und/oder Comonomere in den zweiten Reaktor (4) einzuspeisen. Es besteht zudem die Möglichkeit, eine Teilmenge des über Leitung (22) strömenden Diols über Leitung (22a) abzuzweigen und für die Zubereitung der Paste zu verwenden.

Für den Fall, dass das in Fig. 1 dargestellte Verfahrensschema zum Zwecke der Umesterung benutzt wird, wird über Leitung (1) Diol und über Leitung (25) DMT in den ersten Reaktor (2) gespeist.

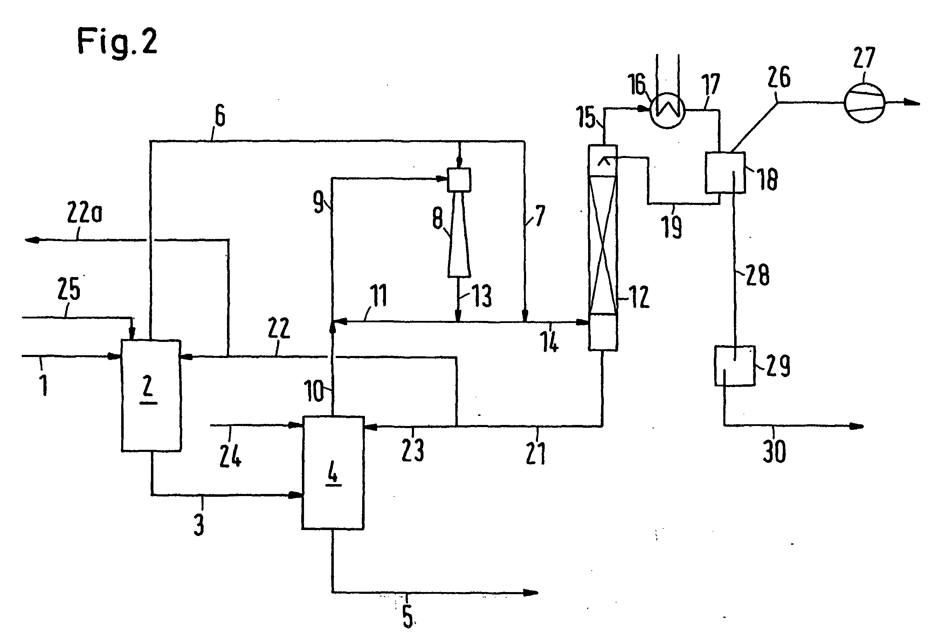

Um das in Fig. 1 wiedergegebene Verfahrensschema auch unter Vakuum betreiben zu können, ist nach Fig. 2 vorgesehen, hinter dem Kondensator (16) eine Restgaskompression mit Hilfe einer über Leitung (26) aus dem Rücklaufbehälter (18) das Restgas absaugende Pumpe (27) vorzunehmen. Das über Leitung (28) aus dem Rücklaufbehälter (18) fließende Kondensat wird über einen Abtauchbehälter (29) auf Normaldruck gebracht und das Kondensat dann über Leitung (30) aus dem Prozess entfernt.

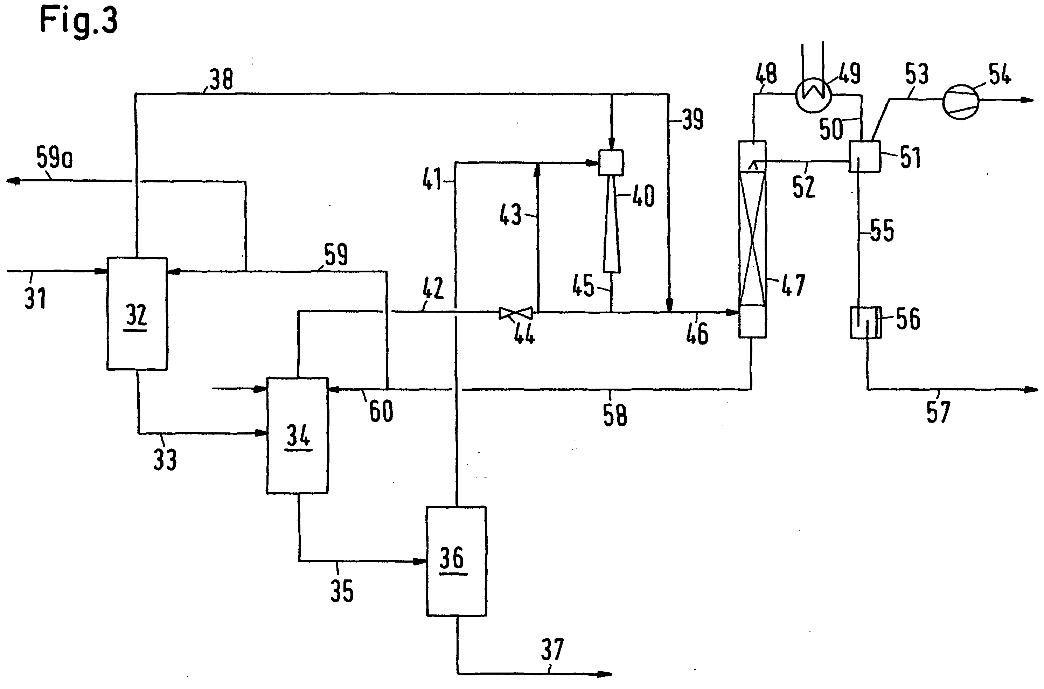

Bei dem Verfahrensschema gemäß Fig. 3 wird über Leitung (31) EG / TPA-Paste in den ersten Reaktor (32) eingetragen, dessen Austrag über Leitung (33) in den zweiten Reaktor (34) eingespeist wird. Der den zweiten Reaktor (34) über Leitung (35) verlassende Produktstrom wird dem dritten Reaktor (36) zugeführt, aus dem über Leitung (37) das fertige Veresterungsprodukt ausgetragen wird. Die aus dem ersten Reaktor (32) austretenden Brüden werden über Leitung (38) abzüglich eines kleinen über Leitung (39) strömenden, zur Druckregelung in der ersten Reaktionsstufe (32) benutzten Bypassstroms der beheizten Gasstrahlpumpe (40) zugeführt. Den über Leitung (41) aus dem dritten Reaktor (36) abgeleiteten Brüden wird über Leitung (43) eine Ballastdampfmenge aus den über Leitung (42) strömenden Brüden des zweiten Reaktors (34) zugesetzt, um mittels der Gasstrahlpumpe (40) die Brüden des dritten Reaktors (36) auf den Druck der Trennkolonne zu verdichten. Die über Leitung (42) aus dem zweiten Reaktor (34) austretenden Brüden werden bei Bedarf nach dem Durchströmen des Druckhalteventils (44) mit dem über Leitung (45) aus der Gasstrahlpumpe (40) austretenden Brüden sowie mit dem über Leitung (39) zugeführten Bypassstrom vereinigt, so dass der Druck des zweiten Reaktors (34) größer oder gleich dem Druck in der Trennkolonne ist. Über Leitung (46) werden die zusammengeführten Brüden in die Trennkolonne (47) eingespeist, wo die leichtsiedenden Komponenten von der schwersiedenden Diolkomponente getrennt werden. Die am Kopf der Trennkolonne (47) über Leitung (48) abgeführten leicht siedenden Komponenten werden in dem Kondensator (49) kondensiert. Das Kondensat läuft über Leitung (50) in den Rücklaufbehälter (51), aus dem ein Teil über Leitung (52) dem Kopf der Trennkolonne (47) wieder aufgegeben wird. Zum Vakuumbetrieb der Trennkolonne (47) bei Teillast ist der Rücklaufbehälter (51) über Leitung (53) mit einer Saugpumpe (54) verbunden. Das über Leitung (55) aus dem Rücklaufbehälter (51) ablaufende Kondensat wird in dem Abtauchbehälter (56) auf Normaldruck gebracht und über Leitung (57) zur weiteren Aufbereitung entfernt. Das im Sumpf der Trennkolonne (47) einen kleinen Anteil an schwer siedenden Komponenten enthaltende Ethandiol wird über Leitungen (58, 59) zum größeren Teil in den ersten Reaktor (32) und zum kleineren Teil über Leitung (60) in den zweiten Reaktor (34) zurückgeführt. Aus dem über Leitung (59) fließenden Diol kann über Leitung (59a) eine Teilmenge abgezweigt und zur Zubereitung der Paste benutzt werden.

## Patentansprüche

1. Verfahren zur Herstellung von Polyestern und Copolyestern durch kontinuierliche Veresterung von Dicarbonsäureestem und Diolen oder durch kontinuierliche Umesterung von Dicarbonsäureestem mit Diolen in n hintereinander geschalteten Reaktionsdruckstufen (2, 4, 32, 34, 36) wobei der in der ersten Reaktionsdruckstufe (2, 32) herrschende, gegenüber den übrigen Reaktionsdruckstufen (4, 34, 36) höhere Druck sukzessive von Reaktionsdruckstufe zu Reaktionsdruckstufe abfällt, die Brüdenströme der einzelnen Reaktionsdruckstufen vereinigt in eine Trennkolonne (12, 47) eingespeist und rektifiziert werden und die im Sumpf der Trennkolonne anfallende Diolkomponente mindestens in die erste Reaktionsdruckstufe rückgeführt wird, **dadurch gekennzeichnet, dass** die Brüdenströme der einzelnen Reaktionsdruckstufen vereinigt in eine Trennkolonne eingespeist und rektifiziert werden und wenigstens die letzte Reaktionsdruckstufe einen Unterdruck aufweist, der Druck in der Trennkolonne (12, 47) größer als in der letzten Reaktionsdruckstufe ist und die aus der letzten Reaktionsdruckstufe austretenden Brüden auf den in der Trennkolonne herrschenden Druck verdichtet werden.

2. Verfahren nach Anspruch 1 **gekennzeichnet durch** 2 bis 4 hintereinander geschaltete Reaktionsdruckstufen (2, 4, 32, 34, 36).

3. Verfahren nach einem der Ansprüche 1 und 2 **dadurch gekennzeichnet, dass** für die Herstellung von PET-Veresterungsprodukt das Zulaufgemisch einer ersten mit einem Druck von 1,1 bis 5,0 bar gefahrenen Reaktionsdruckstufe (32) zugeführt wird, der sich eine zweite mit einem Druck von 0,5 bis 1,5 bar gefahrene Reaktionsdruckstufe (34) und danach eine mit Vakuum von 0,1 bis 0,9 bar gefahrene dritte Reaktionsdruckstufe (36) anschließt

4. Verfahren nach einem der Ansprüche 1 und 2 **dadurch gekennzeichnet, dass** für die Herstellung von PTT-Veresterungsprodukt das Zulaufgemisch einer ersten mit einem Druck von 1,0 bis 5,0 bar gefahrenen Reaktionsdruckstufe (2) zugeführt wird, der sich eine zweite mit einem Druck von 0,5 bis 1,3 bar gefahrene Reaktionsdruckstufe (4) anschließt.

5. Verfahren nach einem der Ansprüche 1 und 2 **dadurch gekennzeichnet, dass** für die Herstellung von PBT-Umesterungsprodukt die Ausgangsstoffe einer ersten mit einem Druck von 0,8 bis 1,2 bar gefahrenen Reaktionsdruckstufe (2) zugeführt werden, der sich eine zweite mit einem Druck von 0,2 bis 0,8 bar gefahrene Reaktionsdruckstufe (4) anschließt.

6. Verfahren nach einem der Ansprüche 1 bis 5 **dadurch gekennzeichnet, dass** die aus der letzten Reaktionsdruckstufe (4, 36) austretende Brüden mittels Kompressor, Gebläse oder Ventilator verdichtet werden.

7. Verfahren nach einem der Ansprüche 1 bis 5 **dadurch gekennzeichnet, dass** die aus der letzten Reaktionsdruckstufe (4, 36) austretende Brüden mittels einer Gasstrahlpumpe (8, 40) verdichtet werden.

8. Verfahren nach Anspruch 7 **dadurch gekennzeichnet, dass** als Treibmittel für die Gasstrahlpumpe (8, 40) Brüden der ersten Reaktionsdruckstufe (2, 32) verwendet werden.

9. Verfahren nach einem der Ansprüche 1 bis 8 **dadurch gekennzeichnet, dass** der in der Trennkolonne (12, 47) herrschende Druck durch eine nach dem am Kopf der Trennkolonne angeordneten Kondensator (16, 49) befindliche Restgasabsaugung (27, 54) geregelt wird.

10. Verfahren nach Anspruch 9 **dadurch gekennzeichnet, dass** die Restgasabsaugung (27, 54) mit einer Flüssigkeitsstrahlpumpe, einer Flüssigkeitsringpumpe oder einem Gebläse durchgeführt wird.

11. Verfahren nach einem der Ansprüche 1 bis 10 **dadurch gekennzeichnet, dass** die Veresterungsprodukte oder Umesterungsprodukte einer Vorpolykondensation und Polykondensation unterworfen werden.

12. Verfahren nach einem der Ansprüche 1 bis 11 **dadurch gekennzeichnet, dass** eine Teilmenge aus der über Leitung (22, 59) in die erste Reaktionsdruckstufe rückgeführten Diols über Leitung (22a, 59a) abgezweigt und für die Zubereitung der Paste benutzt wird.

## Claims

1. A. method for the manufacture of polyesters and copolyesters by continuous esterification of dicarboxylic acids and diols or by continuous transesterification of dicarboxylic acids with diols in consecutively connected reaction pressure stages (2, 4, 32, 34, 36), wherein the higher pressure prevailing in the first reaction pressure stage (2, 32), compared to the remainder of the reaction pressure stages (4, 34, 36), decreases successively from reaction stage to reaction stage, the exhaust vapor streams of the individual reaction pressure stages combined are injected into and rectified in a separation column (12, 47) and the resulting diol components in the sump of the separation column at least in the first reaction pressure stage are returned, **characterized in that**, the exhaust vapor streams of the individual reaction pressure stages combined are injected into and rectified in a separation column and at least the last reaction pressure stage a reduced pressure, the pressure in the separation column (12, 47) is larger than in the last reaction pressure stage and the exhaust vapors exiting from the last reaction pressure stage are condensed at the pressure prevailing in the separation column.

2. The method according to claim 1, **characterized by** having 2 to 4 successively connected reaction pressure stages (2, 4, 32, 34, 36).

3. The method according to one of Claims 1 and 2, **characterized in that** for the manufacture of PET esterification product, the feed mixture is supplied to a first reaction pressure stage (32) run at a pressure of 1.1 to 5.0 bar, a second reaction pressure stage (34) run at a pressure from 0.5 to 1.5 bar, and after that follows a third reaction pressure stage (36) run under a vacuum from 0.1 to 0.9 bar.

4. The method according to one of Claims 1 and 2, **characterized in that** for the manufacture of PTT esterification product, the feed mixture is supplied to a first reaction pressure stage (2) run at a pressure of 1.0 to 5.0 bar, a second reaction pressure stage (4) follows run at a pressure from 0.5 to 1.3 bar.

5. The method according to one of Claims 1 and 2, **characterized in that** for the manufacture of PBT esterification product, the starting materials are fed to a first reaction pressure stage (2) run at a pressure of 0.8 to 1.2 bar, a second reaction pressure stage (4) follows at a pressure from 0.2 to 0.8 bar.

6. The method according to one of Claims 1 through 5, **characterized in that** the exhaust vapors coming from the last reaction pressure stage (4, 36), are condensed by means of a compressor, blower or ventilator.

7. The method according to one of Claims 1 through 5, **characterized in that** the exhaust vapors from the last reaction pressure stage (4, 36), are condensed by means of a gas jet pump (8, 40).

8. The method according to Claim 7, **characterized in that** as expansion means for the gas jet pump (8, 40), exhaust vapors from the first reaction pressure stage (2, 32) are used.

9. The method according to one of Claims 1 through 8, **characterized in that** the pressure prevailing in the separation column (12, 47) is regulated by means of residual gas extraction (27, 54) located after the condenser (16, 49) at the head of the separation column.

10. The method according to Claims 9, **characterized in that** the residual gas extraction (27, 54) is carried out by means of a liquid jet pump, a liquid ring pump or a blower.

11. The method according to Claims 1 through 10, **characterized in that** the esterification products or transesterification products are subjected to a pre-polycondensation and polycondensation.

12. The method according to Claims 1 through 11, **characterized in that** a part of the diol returned via line (22, 59) into the first reaction pressure stage, is branched of via line (22a, 59a) and used for preparation of the paste.

## Revendications

1. Procédé en vue de la production de polyesters et de copolyesters par estérification continue d'esters dicarboxyliques et de diols ou par transestérification continue d'esters dicarboxyliques avec des diols dans n paliers de pression réactionnelle successifs (2, 4, 32, 34, 36), la pression régnant dans le premier palier de pression réactionnelle (2, 32) supérieure aux autres paliers de pression réactionnelle (4, 34, 36) diminuant successivement de palier de pression réactionnelle en palier de pression réactionnelle, les courants de vapeur chaude des paliers de pression réactionnelle individuels étant alimentés et rectifiés ensemble dans une colonne de séparation (12, 47) et le composant diol précipitant dans le bas de la colonne de séparation étant renvoyé au moins dans le premier palier de pression réactionnelle, **caractérisé en ce que** les courants de vapeur chaude des paliers de pression réactionnelle individuels sont alimentés et rectifiés ensemble dans une colonne de séparation et au moins le dernier palier de pression réactionnelle présente une sous-pression, la pression dans la colonne de séparation (12, 47) est supérieure à celle dans le dernier palier de pression réactionnelle et les vapeurs chaudes sortant du dernier palier de pression réactionnelle sont comprimées à la pression régnant dans la colonne de séparation.

2. Procédé selon la revendication 1, **caractérisé par** 2 à 4 paliers de pression réactionnelle successifs (2, 4, 32, 34, 36).

3. Procédé selon l'une quelconque des revendications 1 et 2, **caractérisé en ce que** le mélange d'amenée pour la production d'un produit d'estérification en PET est amené à un premier palier de pression réactionnelle (32) conduit à une pression de 1,1 à 5,0 bars qui est suivi par un deuxième palier de pression réactionnelle (34) conduit à une pression de 0,5 à 1,5 bar et ensuite par un troisième palier de pression réactionnelle (36) conduit à un vide de 0,1 à 0,9 bar.

4. Procédé selon l'une quelconque des revendications 1 et 2, **caractérisé en ce que** le mélange d'amenée pour la production d'un produit d'estérification en PTT est amené à un premier palier de pression réactionnelle (2) conduit à une pression de 1,0 à 5,0 bars qui est suivi par un deuxième palier de pression réactionnelle (4) conduit à une pression de 0,5 à 1,3 bar.

5. Procédé selon l'une quelconque des revendications 1 et 2, **caractérisé en ce que** les produits de départ pour la production d'un produit de transestérification en PBT sont amenés à un premier palier de pression réactionnelle (2) conduit à une pression de 0,8 à 1,2 bar qui est suivi par un deuxième palier de pression réactionnelle (4) conduit à une pression de 0,2 à 0,8 bar.

6. Procédé selon l'une quelconque des revendications 1 à 5, **caractérisé en ce que** les vapeurs chaudes sortant du dernier palier de pression réactionnelle (4, 36) sont comprimées au moyen d'un compresseur, d'une soufflante ou d'un ventilateur.

7. Procédé selon l'une quelconque des revendications 1 à 5, **caractérisé en ce que** les vapeurs chaudes sortant du dernier palier de pression réactionnelle (4, 36) sont comprimées au moyen d'un éjecteur à gaz (8, 40).

8. Procédé selon la revendication 7, **caractérisé en ce que** des vapeurs chaudes du premier palier de pression réactionnelle (2, 32) sont utilisées en tant que fluide moteur pour l'éjecteur à gaz (8, 40).

9. Procédé selon l'une quelconque des revendications 1 à 8, **caractérisé en ce que** la pression régnant dans la colonne de séparation (12, 47) est régulée par une aspiration de gaz résiduel (27, 54) se trouvant après le condensateur (16, 49) disposé à la tête de la colonne de séparation.

10. Procédé selon la revendication 9, **caractérisé en ce que** l'aspiration de gaz résiduel (27, 54) est effectuée avec une pompe à jet de liquide, une pompe à anneau de liquide ou une soufflante.

11. Procédé selon l'une quelconque des revendications 1 à 10, **caractérisé en ce que** les produits d'estérification ou les produits de transestérification sont soumis à une polycondensation préalable et à une polycondensation.

12. Procédé selon l'une quelconque des revendications 1 à 11, **caractérisé en ce qu'**une quantité partielle provenant du diol renvoyé par l'intermédiaire de la conduite (22, 59) dans le premier palier de pression réactionnelle est séparée par l'intermédiaire de la conduite (22a, 59a) et utilisée pour la préparation de la pâte.
